# EUROPÄISCHE PATENTSCHRIFT

(11) **EP 1 560 004 B1**
(45) Veröffentlichungstag und Bekanntmachung des Hinweises auf die Patenterteilung: **09.12.2009**
(21) Anmeldenummer: 04075197.6
(22) Anmeldetag: 27.01.2004
(51) Int. Cl.: G01G 7/02, H01F 5/00

(54) **Spule mit Feuchtigkeitsschutzschichten**
Coil with moisture protection layers
Bobine avec couches de protection contre l'humidité

(43) Veröffentlichungstag der Anmeldung: 03.08.2005
(73) Patentinhaber: Mettler-Toledo AG, 8606 Greifensee (CH)
(72) Erfinder: Tellenbach, Jean-Maurice, 8442 Hettlingen (CH); Ziebart, Volker, 8418 Schlatt (CH); Burkhard, Hans-Rudolf, 8942 Wila (CH)

(56) Entgegenhaltungen:
- CH-A- 504 675
- JP-A- 1 068 624

## Beschreibung

Die Erfindung betrifft eine elektromagnetische Spule für einen induktiven Sensor, welche Spule insbesondere in einem nach dem Prinzip der elektromagnetischen Kraftkompensation arbeitenden Sensor Einsatz findet, wobei die Spule mit Mitteln zum Schutz gegen eindringende Feuchtigkeit versehen ist. Die Erfindung betrifft ferner eine Kraftmesszelle mit einer solchen Spule und ein Verfahren zum Aufbringen einer Schutzbeschichtung auf eine Spule.

Bei einem induktiven Sensor handelt es sich zum Beispiel um eine in einem inhomogenen Magnetfeld bewegliche Spule, in welcher aufgrund einer Lageveränderung dieser Spule in eine Richtung der Inhomogenität ein Strom induziert wird. Dieser Strom ist ein Mass für die Lageveränderung und kann dazu verwendet werden, eine eine solche Lageveränderung hervorrufende Kraft zu messen.

Andere induktive Sensoren, welche bevorzugt in Kraftmesszellen ihren Einsatz finden, weisen eine Stromdurchflossene Spule auf, die im homogenen Magnetfeld eines Permanentmagneten beweglich ist. Eine auf die Spule wirkende Kraft bewirkt eine Lageveränderung der Spule, welche von einem optischen Lagesensor festgestellt wird, woraufhin über eine Regelungsschaltung der Stromfluss in der Spule solange verändert wird, bis sie wieder in ihrer ursprünglichen Lage gehalten werden kann. Die Stromänderung ist ein Mass für die mit Kraftmesszelle zu messende Kraft. Dieses Messprinzip wird als elektromagnetische Kraftkompensation bezeichnet

In einer nach diesem Prinzip der elektromagnetischen Kraftkompensation arbeitenden Kraftmessvorrichtung, welche beispielsweise in der Wägetechnologie ihren Einsatz findet, ist eine Vorrichtung zur Kraftübertragung vorhanden, welche eine Parallelführung und häufig ein Hebelwerk zur Untersetzung einer zu übertragenden Kraft, beispielsweise einer Last, aufweist. Der Sensor weist einen Permanentmagneten mit einem Luftspalt auf, wobei eine Spule in das magnetische Feld im Luftspalt des Permanentmagneten eintaucht. Im Falle eines vorhandenen Hebelwerks ist diese Spule bevorzugt am längeren Hebelarm des letzten Hebels befestigt. Eine solche Spule besteht aus einer oder mehreren Windungen eines isolierten Drahtes aus Metall, in der Regel aus Kupfer. Eine elektrische Isolation des Drahtes ist notwendig, um einen elektrischen Kontakt zwischen benachbarten Windungen zu vermeiden.

Die Spule ist häufig auf einen Spulenkörper gewickelt, der den Windungen die notwendige Stabilität verleiht. Es gibt jedoch auch so genannte Luftspulen, die durch eine die Windungen miteinander verbindenden Klebemasse in ihrer Form gehalten werden.

Eine häufige Forderung an eine solche nach dem Prinzip der elektromagnetischen Kraftkompensation arbeitenden Kraftmesszelle, insbesondere wenn sie für eine hohe Auflösung ausgelegt ist, ist, eine hohe Empfindlichkeit zu erzielen, welche sich beispielsweise während des Betriebs einer mit der Kraftmesszelle versehenen Waage nicht verändert.

Neben hier nicht näher angeführten Parametern trägt auch die Spule zu einer Empfindlichkeitsänderung der Kraftmesszelle bei, namentlich die Feuchtigkeitsaufnahme des den Spulendraht umgebenden Isolationsmaterials. Ferner resultiert eine solche Feuchtigkeitsaufnahme der Drahtisolation in einer Verschiebung des Nullpunkts der Kraftmesszelle bei. Die Isolation des Spulendrahtes besteht fast immer aus einem Polymer, beispielsweise aus Polyurethan, Polyimid oder Polyamidimid.

Die Feuchtigkeitsaufnahme des Isolationsmaterials des Spulendrahts, oder allgemein, die Änderung des Feuchtigkeitsgehalts des Isolationsmaterials, welche von der Umgebungsfeuchtigkeit der Kraftmesszelle abhängt, kann beispielsweise zu Leckströmen zwischen den Windungen führen. Eine weitere mögliche Wirkung einer von der Umgebungsfeuchtigkeit abhängigen Feuchtigkeitsaufnahme beziehungsweise ―abgabe ist, dass das Isolationsmaterial quellen oder schrumpfen kann, was zu einer geometrischen Änderung der Spule, insbesondere des Abstands benachbarter Windungen führt und demzufolge auch zu mechanischen Spannungen innerhalb der Spule. Ausserdem ist mit einer Feuchtigkeitsänderung auch eine Gewichtsänderung einer Spule verbunden.

Alle diese feuchtigkeitsbedingten Wirkungen haben zeitliche Änderungen des Messergebnisses zum Resultat, wenn eine solche Spule in einem induktiven Messsensor eingesetzt wird. Insbesondere im Fall einer nach der elektromagnetischen Kraftkompensation arbeitenden Kraftmesszelle wird deren Empfindlichkeit von der Feuchtigkeitsaufnahme des Isolationsmaterials des Spulendrahts mit bestimmt.

Massnahmen verschiedener Art wurden im Stand der Technik zur Vermeidung oder zumindest zur Reduktion der Feuchtigkeitsaufnahme in einer Spule vorgeschlagen oder werden praktiziert.

Zum Beispiel wird ein Aluminiumschrumpfring auf eine auf einen Spulenkörper gewickelte Spule aufgebracht. Durch thermische Ausdehnung bei Erwärmung des Aluminiumrings kann dieser über den mit der Spule versehenen Spulenkörper gestülpt werden, wobei sich beim Abkühlen der Aluminiumring fest an die Spule und den Spulenkörper anpresst und eine gewisse abdichtende Wirkung gegen einen Feuchtigkeitsaustausch mit der Umgebung aufweist. Gegebenenfalls, wenn eine erhöhte Dichtigkeit gefordert ist, wird der Ring mit dem Spulenkörper verschweisst. Es bleibt einzig eine Öffnung für den Durchtritt der Zuleitungen zur Spule, welche zusätzlich mittels Lack abgedichtet werden muss.

Auch mittels einer direkt auf eine Spule aufgebrachten dicken Lackschicht, welche durch thermische Behandlung verfestigt wird, werden - zumindest für Kraftmesszellen mit relativ niedrigen Empfindlichkeitsanforderungen - befriedigende Ergebnisse für eine Messresultatsverbesserung in einer Umgebung mit einer relativ grossen Variation der Feuchtigkeit, beispielsweise zwischen 20% und 80% relativer Luftfeuchtigkeit, erzielt.

Die JP 25 18171 Y2 offenbart für die elektromagnetische Einheit einer elektromagnetischen Waage eine wasserdichte Kapselung des Spulenbauteils. Die Spule ist auf einen Spulenkörper aufgebracht, welcher derart ausgestaltet ist, dass sich die Windungen der Spule in einer Ausnehmung des Spulenkörpers befinden.

Mittels eines an den Spulenkörper angepassten wasserdichten Rings wird die Spule innerhalb der Ausnehmung des Spulenkörpers verschlossen. Zwischen dem Spulenkörper und dem wasserdichten Ring besteht eine fest haftende Rastverbindung.

Nachteilig bei der Verwendung von abdichtenden Ringen ist, dass das Gesamtgewicht der Spule vergrössert wird; entscheidend ist jedoch, dass die geometrische Abmessung der Spule, insbesondere ihre Dicke stark vergrössert wird, wodurch die Breite des Luftspalts im Permanentmagneten diesem Sachverhalt angepasst werden muss. Eine Vergrösserung des Luftspalts verkleinert jedoch das im Luftspalt ausgebildete Magnetfeld bei einem gleich bleibenden Magnetsystem und wirkt sich somit negativ auf die Empfindlichkeit des Sensors aus. Um die Empfindlichkeit des Sensors beizubehalten, ist ein vergrössertes Magnetsystem vonnöten, welches allerdings schwerer zu handhaben und teurer in der Herstellung ist.

Ferner sind bei den gemäss dem Stand der Technik abgedichteten Spulen nach wie vor Massnahmen zum Abdichten der Öffnung für den Durchtritt der Zuleitungen zur Spule notwendig. Die oben erwähnte Lackabdichtung liefert nicht die notwendige Dichtigkeit, die erforderlich wäre, um im Falle von hochauflösenden Kraftmesszellen, die zu einer hohen Empfindlichkeit notwendigen niedrigen Werte für die Feuchtigkeitsaufnahme zu bewirken. Dasselbe gilt auch für die oben erwähnte Abdichtung der gesamten Spule mit einer Lackbeschichtung.

In der CH 504 675 A ist eine in einer Kraftkompensationsvorrichtung einer Waage verwendbare Spule offenbart, welche mit einer Schutzbeschichtung gegen eindringende Feuchtigkeit versehen wird. Dabei wird die Spule nach dem Aufwickeln mit einem isolierenden Kunststoff umgossen und anschliessend galvanisch eine Schutzschicht aus Kupfer aufgebracht, welcher eine Deckschicht aus Gold folgt.

Die JP 1 068 624 A offenbart eine auf einen Spulenkörper gewickelte Spule, welche leitende mit einer polymeren Beschichtung versehene Windungen aufweist. Diese Spule ist mit einer metallischen Folie, beispielsweise einer Aluminiumfolie bedeckt, wobei zumindest ein Teil des Spulenkörpers ebenfalls von der Metallfolie bedeckt ist.

Aufgabe der vorliegenden Erfindung ist es daher, eine Spule mit einem einfachen und hochwirksamen Feuchtigkeitsschutz zu versehen.

Diese Aufgabe wird mit den Merkmalen des Anspruchs 1 gelöst.

Eine Spule für einen induktiven Sensor, insbesondere in einem nach dem Prinzip der elektromagnetischen Kraftkompensation arbeitenden Sensor zur Wandlung der Grösse der von einer Last in einer Kraftmesszelle induzierten Kraft in ein elektrisches Signal, ist mit Mitteln zum Schutz gegen eindringende Feuchtigkeit versehen. Diese Mittel zum Schutz weisen eine Schutzbeschichtung auf, die eine erste auf die Spule aufgebrachte ausgleichende Schicht besitzt, auf welcher eine zweite als Schutzschicht gegen eindringende Feuchtigkeit wirkende Schicht aufgebracht ist. Die Schutzschicht ist eine Mehrlagenschicht, wobei diese aus einer abwechselnden Folge von anorganischen Lagen mit hohen Barriereeigenschaften und von Zwischenlagen besteht. Die Schutzschicht besteht aus mindestens drei Lagen, wobei einer anorganischen Barrierelage eine Zwischenlage folgt und der Zwischenlage eine weitere Barrierelage. Die Zwischenlagen dienen dazu, die in den ihr benachbarten Barrierelagen noch vorhandenen Mikroporen und Haarrisse (Mikrorisse) abzudichten. Dadurch sind Mikroporen oder Haarrisse nicht durchgängig über die gesamte Schichtdicke vorhanden, sondern befinden sich in der nächsten Barrierelage an anderer Stelle, wodurch eine Art Labyrinth für eindringende Feuchtigkeit gebildet wird. Eine besonders vorteilhafte Wirkung einer mehrlagigen Schutzschicht mit einer unterlegten ausgleichenden Schicht besteht darin, dass stark gekrümmte Oberflächen, an welchen in einer anorganischen Barrierelage oben erwähnte Mikroporen oder Haarrisse durch lokale Spannungen, insbesondere auch thermische Spannungen, bevorzugt entstehen könnten und die ausserdem auch als Haftstellen für diese Mikroporen und Haarrisse wirken können, einerseits durch die der Schutzschicht unterlegte ausgleichende Schicht abgerundet werden und somit das Vorhandensein von Mikroporen oder Mikrorissen in der Schutzschicht von vorne herein reduziert wird, andererseits durch die Zwischenlagen die Mikroporen und Haarrisse abgedeckt werden, wodurch oben erwähnter Labyrintheffekt für eindringende Feuchtigkeit entsteht.

Eine kontinuierliche Veränderung kann für Mehrlagenschichten in der Art und Weise erfolgen, dass die Übergänge zwischen den einzelnen Lagen "weich" ist, das heisst, dass sich die Schichtparameter nicht abrupt ändern, sondern ihr Profil eher einer Sinusfunktion gleicht.

Eine ausgleichende erste Schicht als Grundlage haftet an den Drahtwicklungen der Spule bzw. deren Isolationsummantelung und bewirkt eine Glättung, so dass die Zwischenräume zwischen den einzelnen Windungen aufgefüllt werden und eine Fläche mit wesentlich geringerer Oberflächenstruktur entsteht, als sie die Spulenoberfläche selbst aufweist, welche Fläche dann als Unterlage für die eigentliche Feuchtigkeitsschutzschicht zur Verfügung steht.

Die Schutzschicht kann gemäss den Anforderungen an die Empfindlichkeit des die Spule enthaltenden Sensors ausgestaltet werden. Sie ist im Verhältnis zur ausgleichenden Schicht dünn, da sie eine entsprechend geglättete Unterlage zum Aufwachsen vorfindet.

In einer vorteilhaften Verwendung der Spule in einer Kraftmesszelle mit einer Vorrichtung zur Kraftübertragung, mit einem nach dem Prinzip der elektromagnetischen Kraftkompensation arbeitenden Sensor zur Wandlung der Grösse der von einer Last induzierten Kraft in ein elektrisches Signal, wobei die Spule im magnetischen Feld eines Permanentmagneten in einer Dimension beweglich ist, ist die Spule mit Mitteln zum Schutz gegen eindringende Feuchtigkeit versehen, wobei diese Mittel eine Schutzbeschichtung aufweisen, die eine erste auf die Spule aufgebrachte ausgleichende Schicht besitzen, auf welcher eine zweite, als Schutzschicht gegen eindringende Feuchtigkeit wirkende Schicht abgeschieden ist. Die Schutzschicht ist eine Mehrlagenschicht, wobei diese aus einer abwechselnden Folge von anorganischen Lagen mit hohen Barriereeigenschaften und von Zwischenlagen besteht.

Eine solche Schutzschicht ist somit inhomogen über ihre Dicke ausgebildet. Dadurch wird die Entstehung von Haarrissen oder Mikroporen in der Schutzschicht reduziert.

In einer vorteilhaften Ausgestaltung weist die Schutzschicht eine abwechselnde Folge von Barrierelagen und polymeren Zwischenlagen auf. Polymere Zwischenlagen haben den Vorteil, dass sie, vor allem wenn sie aus der Flüssigphase beziehungsweise aus einer Lösung abgeschieden werden, die glättende Wirkung der unterlegten ausgleichenden Schicht weiter verstärken und somit die folgenden Barrierelagen auf einer immer weniger rauen Unterlage abgeschieden werden.

In einer besonders vorteilhaften Ausführungsform der Schutzschicht ist vorgesehen, diese gesamthaft aus anorganischen Materialien herzustellen. Dabei kann eine mehrlagige Schutzschicht derart ausgestaltet sein, dass sie in abwechselnder Folge verschiedene anorganische Materialien aufweist, und/oder in abwechselnder Folge verschiedene stöchiometrische Zusammensetzungen eines aus mindestens zwei Komponenten bestehenden anorganischen Materials aufweist, und/oder in abwechselnder Folge variierende strukturelle Parameter eines anorganischen Materials aufweist.

Besonders positiv wirkt sich bei den anorganischen mehrlagigen Schutzschichten aus, dass sie in einem Arbeitsgang beziehungsweise in einer Beschichtungsanlage erzeugt werden können.

Eine besondere Eigenschaft dieser anorganischen Schutzschicht, insbesondere einzelner Lagen derselben, wenn sie als Mehrlagenschicht ausgebildet ist, ist, dass sie beim Aufbringen mittels plasma-enhanced-chemical-vapour-deposition (PECVD) bevorzugt konformal auf ihrer Unterlage aufwächst. Dies bedeutet, dass sie im Wesentlichen eine Bedeckung konstanter Dicke aufweist, unabhängig vom Winkel, den ihre Unterlage lokal zur Ausrichtung der Quelle während des Beschichtungsvorgangs einnimmt. Damit werden auch stark gekrümmte Oberflächen, beispielsweise an den Spulenenden ebenso von der Schutzschicht bedeckt, wie die von der ausgleichenden Schicht zumindest teilweise geglätteten Seitenflächen der Spule. Somit ergibt sich eine optimierte Schutzwirkung gegenüber eindringender Feuchtigkeit.

In besonderer Weise kann die Schutzschicht eine Abfolge von Siliziumoxid- und Siliziumnitrid-Lagen aufweisen. Solche Schutzschichten offenbart die WO03/050894 für die Bedeckung elektronischer Vorrichtungen, insbesondere von Anzeigevorrichtungen, wie Licht emittierende Vorrichtungen oder Flüssigkristallanzeigen.

Bei der Herstellung von Schichten mit mindestens einem kontinuierlich variierenden Parameter, ändert beispielsweise während des Aufbringens die Quelle ihre Materialzusammensetzung, beziehungsweise für die Schicht wird aus zwei Quellen mit sich jeweils ändernder Rate - einmal zunehmend als Funktion der Zeit und einmal abnehmend als Funktion der Zeit - Material abgeschieden.

Die Schichtdicke einer Schutzschicht ist, wie sich von selbst versteht, durch die notwendige Barrierewirkung bestimmt, welche im Falle empfindlicher Sensoren höher ausfallen muss, als für Sensoren in Anwendungen mit geringeren Anforderungen an die Genauigkeit und/oder Empfindlichkeit. Beispielsweise wird in der Wägetechnologie ein induktiver Sensor mit hohen Empfindlichkeitsanforderungen bevorzugt in einer Kraftmesszelle für eine eichfähige Waage verwendet oder in einer Komparatorwaage eingesetzt. Allerdings ist die Barrierewirkung auch abhängig von den für die Schutzschicht verwendeten Materialien und deren Anordnung innerhalb der Schutzschicht, das heisst der Struktur und dem Aufbau der Schutzschicht. Eine Schutzschicht soll aber auch eine genügend hohe Elastizität aufweisen, um einer geringfügigen Grössenänderung einer Spule durch thermische Ausdehnung nachgeben zu können, ohne dabei ihre Barrierewirkung gegenüber eindringender Feuchtigkeit zu verlieren. Dies kann besonders gut durch dünne anorganische Schutzschichten oder Barrierelagen innerhalb einer Schutzschicht erreicht werden. Selbstverständlich spielen auch ökonomische Betrachtungen eine Rolle beim Festlegen der optimalen Schichtdicke einer Schutzschicht beziehungsweise beim Festlegen der Zahl der Lagen innerhalb einer Mahrlagenschicht.

Bevorzugt liegt die Dicke der zweiten als Schutzschicht wirkenden Schicht im Bereich von einigen hundert Nanometern bis wenigen Mikrometern, die Dicke der einzelnen Lagen liegt bei etwa 100 Nanometer bis 500 Nanometer. Für die ausgleichende erste Schicht ist die Dicke gemäss der durch den Drahtdurchmesser bestimmten Oberflächenstruktur der Spulen bestimmt. Sie kann einige Mikrometer bis gegen hundert Mikrometer betragen.

Die Spule in einem beschriebenen induktiven Sensor kann eine Luftspule sein, das heisst die Windungen werden mittels eines Klebmaterials in der Spulenform gehalten oder die Spule besteht aus auf einen Spulenkörper aufgewickelten Drähten. In ersterem Fall ist die gesamt Spule rundum mit einer Schutzbeschichtung zu versehen, in letzterem Fall genügt es, die frei liegenden Bereiche der Spulenwindungen zu beschichten, gegebenenfalls kann aber auch der gesamte Spulenkörper mit beschichtet werden.

Eine mit der Schutzbeschichtung versehene Spule, benötigt im Normalfall keine Kapselung gemäss dem Stand der Technik mehr, wodurch bei unveränderter Breite des Luftspalts des Permanentmagneten eine Spule mit höherer Windungszahl verwendet werden kann oder für den Sensor ein Permanentmagnet mit einem schmäleren Luftspalt gewählt werden kann. Beide Massnahmen führen zu einer deutlichen Verbesserung der Empfindlichkeit des induktiven Sensors.

In einer weiteren Ausführung, das heisst, wenn auf eine Kapselung nicht verzichtet werden kann, weist die vorzugsweise auf einem Spulenkörper angeordnete Spule eine Kapselungsvorrichtung auf und mindestens die von der Kapselung nicht abgedichteten Teile der Spule, wie Anschlussdrähte und/oder die Übergangsstellen der Kapselung zum Spulenkörper sind von der Schutzbeschichtung bedeckt.

In einer besonderen Ausformung der Erfindung ist die Schutzbeschichtung mit einer Abdeckschicht versehen, die die Schutzbeschichtung vor allem gegenüber mechanischen äusseren Einwirkungen schützt. Insbesondere werden hierfür Polymere mit einer besonders geringen Feuchtigkeitsaufnahmefähigkeit aber auch Silikon verwendet.

Ein Verfahren zum Herstellen einer Schutzbeschichtung auf eine Spule sieht vor, eine erste ausgleichende Schicht auf die Spule aufzubringen und auf der ausgleichenden Schicht eine zweite, als Schutzschicht gegen eindringende Feuchtigkeit wirkende, wie oben angegebene Schicht abzuscheiden.

Die Erfindung wird anhand von Beispielen, wie sie schematisch in den Zeichnungen dargestellt sind, im Folgenden beschrieben. Es zeigen:
- Figur 1: eine Prinzipzeichnung einer Kraftmesszelle, die nach dem Prinzip der elektromagnetischen Kraftkompensation arbeitet, im Schnitt;
- Figur 2: eine Spulenanordnung, wie sie bevorzugt in Kraftmesszellen gemäss Figur 1 Einsatz findet, 2a) mit einer Kapselung gemäss dem Stand der Technik in perspektivischer Darstellung; 2b) in einem Schnitt entlang der Linie I - I der Figur 2a); 2c) als Ausschnitt A aus Figur 2b) mit einer Schutzbeschichtung für den Bereich der Öffnung für den Durchtritt der Zuleitungen zur Spule und 2d) als Ausschnitt B aus Figur 2b);
- Figur 3: eine auf einem Spulenkörper angeordnete Spule ohne Kapselung in einer Darstellung wie sie den Figuren 2a) bis 2c) entspricht;
- Figur 4: eine Luftspule ohne Kapselung in einer Darstellung wie sie den Figuren 2a) bis 2c) entspricht;
- Figur 5: eine auf der äusseren Windungslage einer Spule angeordnete Mehrlagenschicht mit einer unterlegten ausgleichenden Schicht in einer stark vergrösserten Schnittzeichnung.

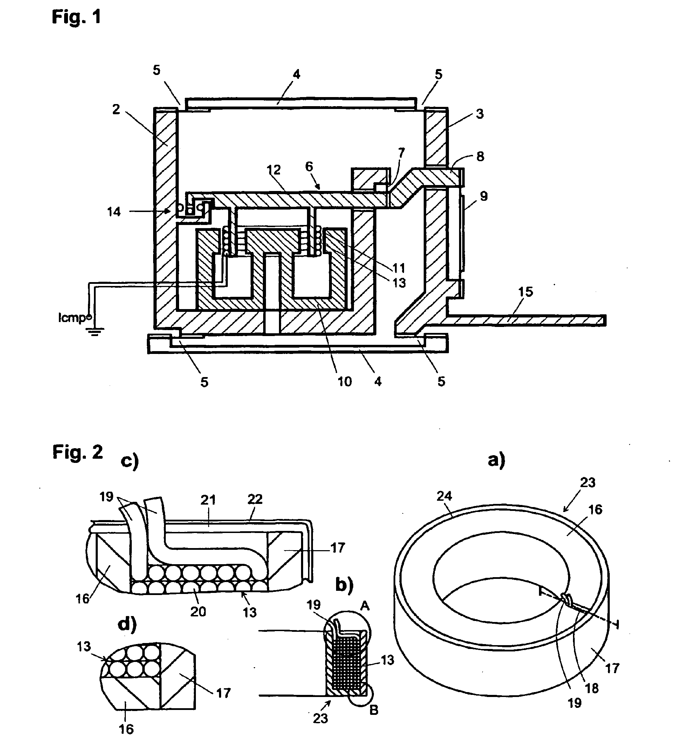

Figur 1 zeigt stark schematisiert eine für eine Verwendung in der Wägetechnologie geeignete Kraftmesszelle 1, die nach dem Prinzip der elektromagnetischen Kraftkompensation arbeitet. Die Kraftmesszelle 1 weist eine Vorrichtung zur Kraftübertragung mit einer Parallelführung mit einem feststehenden Bereich 2 und einem vertikal auslenkbaren Bereich 3, welche jeweils an den Enden eines Paars von Lenkern 4 über Biegelager 5 angelenkt sind, auf. Der vertikal auslenkbare Bereich 3 weist einen zur Aufnahme einer zu messenden Last dienenden Ausleger 15 auf. Die Normalkomponente der von einer Last bewirkten Kraft wird vom vertikal auslenkbaren Bereich 3 durch ein Koppelelement 9 auf den kurzen Hebelarm 8 des Hebels 6 übertragen. Der Hebel 6 ist mittels eines Biegelagers 7 an einem Teil des feststehenden Bereichs 2 abgestützt. Die Kraftmesszelle weist ferner ein topfförmiges Permanentmagnetsystem 10, das in fester Verbindung mit dem feststehenden Teil 2 angeordnet ist, und über einen Luftspalt 11 verfügt, auf. Im Luftspalt 11 ist eine mit dem längeren Hebelarm 12 des Hebels 6 verbundene Spule 13 angeordnet. Die Spule 13 wird von einem Kompensationsstrom I_{cmp} durchflossen, dessen Mass von der auf den Hebel 6 einwirkenden Kraft abhängt. Die Lage des Hebels 6 wird von einer optoelektrischen Messvorrichtung 14 gemessen, die mit einer Regeleinrichtung verbunden ist, welche den Kompensationsstrom I_{cmp} in Abhängigkeit der zugeführten Messsignale derart regelt, dass der Hebel 6 stets in gleicher Lage gehalten oder nach einer Laständerung in diese wieder zurückgeführt wird.

In der Figur 2a) ist eine Spulenanordnung 23, wie sie bevorzugt in Kraftmesszellen 1 gemäss Figur 1 Einsatz findet, mit einer Kapselung mittels eines Dichtungsrings 17 gemäss dem Stand der Technik gezeigt. Die Spule 13 ist auf einem toroïd-förmigen Spulenkörper 16 angeordnet und mittels des Dichtungsrings 17, der bündig mit dem Spulenkörper 16 abschliesst, feuchtigkeitsdicht gekapselt. Lediglich die Öffnung 18 für den Durchtritt der Zuleitungen 19 zur Spule 13 ist von der Kapselung ausgenommen und bildet somit einen Zugang für eindringende Feuchtigkeit zur Spule und insbesondere zu deren Isolationsmaterial, wodurch die eingangs erwähnten unerwünschten Effekte, wie Leckströme zwischen benachbarten Spulenwindungen oder eine geometrische Änderung der Spule, insbesondere des Abstands benachbarter Windungen infolge Quellens des Isolationsmaterials, herbei geführt werden.

Figur 2b) zeigt in einer Schnittzeichnung durch die Spulenanordnung 23 entlang der Linie I - I, wie die einzelnen Windungen 20 innerhalb der Kapselung durch den Spulenkörper 16 einerseits und den Dichtungsring 17 andererseits angeordnet sind. Figur 2c) stellt den Ausschnitt A und Figur 2d) den Ausschnitt B aus Figur 2b) dar. In der Figur 2c) ist dargestellt, wie der Spulenkörper 16 an seiner Oberseite im Bereich der Öffnung 18 durch eine Schutzbeschichtung mit einer ausgleichenden Schicht 21 und einer Schutzschicht 22 bedeckt ist. Gegebenenfalls kann die Öffnung noch zusätzlich mit einem Lack verschlossen sein oder das Material der ausgleichenden Schicht ist im Bereich der Öffnung derart aufgetragen, dass es dieselbe verschliesst. Wenn nun die gesamte Ober- und Unterseite des Spulenkörpers 16 mit der Schutzbeschichtung versehen werden, so wird auch der Übergangsbereich 24 zwischen dem Spulenkörper 16 und dem Dichtungsring 17 abgedichtet, was sich im Falle eines reinen Berührungskontaktes dieser beiden Teile als äusserst nutzbringend hinsichtlich einer Verminderung von eindringender Feuchtigkeit erwiesen hat.

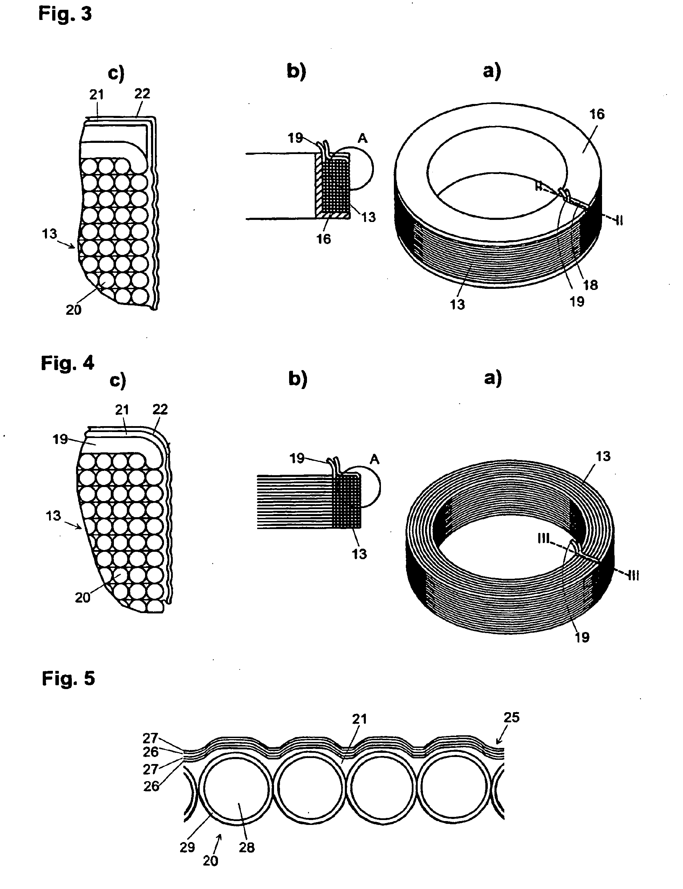

In der Figur 3a) ist eine Spule 13 ohne Kapselung in perspektivischer Darstellung gezeigt, wobei die Spule 13 jedoch auf einem Spulenkörper 16 angeordnet ist. Ein solcher Spulenkörper 16 besteht bevorzugt aus einem unmagnetischen Material, wie beispielsweise Kupfer oder Aluminium. Die Figur 3b) ist eine Schnittzeichnung entlang der Linie II - II der auf dem Spulenkörper 16 angeordneten Spule 13 und Figur 3c) stellt die Vergrösserung des Ausschnitts A aus Figur 3b) dar. In Figur 3c) ist erkennbar, wie die Schutzbeschichtung mit der ausgleichenden Schicht 21 und der Schutzschicht 22 auf der Aussenseite der Spule 13 sowie - zumindest einen Teil derselben bedeckend - der Oberseite (analog gilt dies für die Unterseite) des Spulenkörpers 16 angeordnet ist. Der Spulenkörper 16 muss nicht in seiner Gesamtheit beschichtet werden, da er aus Metall, beispielsweise Kupfer besteht, was bekanntermassen feuchtigkeitsdicht ist.

Die Figuren 4a) bis 4c) zeigen eine den Figuren 3a) bis 3c) analoge Darstellung, jedoch für eine Luftspule, das heisst eine Spule 13, die keinen stützenden Spulenkörper 16 aufweist. Hier muss die Schutzbeschichtung, ebenfalls bestehend aus einer ausgleichenden Schicht 21 und einer Schutzschicht 22 auf sämtlichen Oberflächen der Spule 13 abgeschieden werden.

Die Schutzschicht 22 ist nicht notwendigerweise homogen in Bezug auf ihr Material oder ihre Stöchiometrie oder gar ihre Struktur. Vielmehr hat es sich gezeigt, dass inhomogene Schutzschichten eine hocheffiziente Barrierewirkung gegenüber eindringender Feuchtigkeit aufweisen. Als inhomogene Schichten kommen Mehrlagenschichten, beispielsweise auch solche, die eine kontinuierliche Veränderung eines oder mehrerer Parameter, insbesondere der chemischen Zusammensetzung, über ihre Dicke aufweisen, in Frage.

Eine Mehrlagenschicht kann nun aus einzelnen Lagen mit Materialien hoher Barrierewirkung, wie anorganische Materialien, welche in einer Abfolge mit polymeren Zwischenlagen in der Schutzschicht angeordnet sind, bestehen. Dabei dienen die polymeren Zwischenlagen dazu, Mikroporen und Haarrisse der benachbarten Barrierelagen abzudecken, um somit insgesamt eine hohe Barrierewirkung der Schutzschicht zu erzielen.

Ein Beispiel für eine solche auf einer Spule aufgebrachten Schutzbeschichtung in Form einer Mehrlagenschicht zeigt die Figur 5, die einen stark vergrösserten Ausschnitt der Spulenoberfläche mit einer äusseren Lage von Windungen 20, welche aus einem mit einer Isolation 29 versehenen Draht 28 besteht, darstellt. Die äussere Windungslage ist mit einer Schutzbeschichtung versehen, die eine ausgleichende Schicht 21 und einer Mehrlagenschicht 25 aufweist. Im hier gezeigten Beispiel besteht die Mehrlagenschicht 25 aus vier Einzellagen. Allerdings ist die Anzahl der Lagen in einer Mehrlagenschicht 25 nicht auf einen vordefinierten Wert festgelegt, sondern richtet sich nach den Erfordernissen der noch zu tolerierenden Feuchtigkeitsdurchlässigkeit der gesamten Schicht und ist ebenso eine Funktion der verwendeten Materialien. Es sind Mehrlagenschichten mit drei, vier, fünf oder mehr Einzellagen denkbar.

Die erste Lage der Mehrlagenschicht 25 ist eine Barrierelage 26. Auf diese erste Barrierelage 26 folgt beispielsweise eine polymere Zwischenlage 27. Ihre Funktion ist neben der Stabilisierung der ersten Barrierelage 26 auch eine Reduktion der Entstehung von Mikroporen oder Haarrissen in einer weiteren, der Zwischenlage 27 folgenden Barrierelage 26 durch Bedecken dieser Defekte, was im Falle von polymeren Zwischenlagen 27 einer gewissen glättenden Wirkung zuzuschreiben ist.

Insbesondere wird aber durch die Zwischenlage vermieden, dass die dennoch in geringer Anzahl entstandenen Mikroporen oder Haarrissen einer zweiten Barrierelage 26 sich an solchen der ersten Barrierelage 26 fixieren, was den Feuchtigkeitsdurchgang wieder begünstigen würde. Vielmehr entsteht durch die voneinander unabhängige Lokalisierung der Mikroporen oder Haarrisse in der ersten und in weiteren Barrierelagen 26 eine Art Labyrinth für eindringende Feuchtigkeit, insbesondere Wasser oder in geringem Masse auch Lösungsmittelmolekülen. Dieser Labyrintheffekt führt in einer mehrlagigen Schutzschicht 25 mit aufeinander folgenden Barrierelagen 26 und Zwischenlagen 27 zu einer drastischen Reduktion eindringender Feuchtigkeit.

Die Abfolge von Barrierelagen 26 und Zwischenlagen 27 in einer Schutzschicht 25 ist nicht zwingend regulär, wenngleich wegen einer vereinfachten Herstellung bevorzugt.

Als Materialien für die Barrierelagen 26 sind eine Vielzahl der bekannten, in verschiedenen Beschichtungsverfahren aufbringbaren vorwiegend anorganischen Isolatoren verwendbar. Als Beispiele seien hier Oxide, Nitride, Fluoride, Karbide, Boride oder Kombinationen davon, insbesondere Oxi-Nitride, Mischoxide oder auch Mischkeramiken genannt. Insbesondere haben sich Siliziumoxid, Titanoxid, Tantaloxid, Zirkonoxid, Hafniumoxid, Aluminiumoxid, Chromoxid, Aluminiumoxid, Siliziumnitrid, Titannitrid, Titanfluorid und Siliziumcarbid als Material für die Barrierelagen 26 bewährt. Auch die so genannten "diamond-like carbon"-Schichten können als mögliche Barrierelagen 26 Verwendung finden.

Als weitere Materialien für die Barrierelagen 26 kommen insbesondere auch Metalle, beispielsweise Silber, Aluminium, Gold, Chrom, Kupfer, Nickel, Titan, sowie Legierungen, beispielsweise Nickel-Kobalt-Legierungen, oder intermetallische Verbindungen, zum Beispiel aus Aluminium und Kupfer, aus Wolfram und Kupfer oder aus Titan und Aluminium in Frage.

Neben Acrylat-Polymeren oder anorganisch-organischen Hybridpolymeren (wie sie beispielsweise die EP 0 610 831 A3 beschreibt) können für die Zwischenlagen 27 auch weitere polymere Materialien Verwendung finden. Als Beispiele seien angeführt: polymere Amide, Alkyde, Styrole, Xylylene, Phenylene, Aldehyde, Estere, Urethane, Epoxide, Imide, Phenole, Ketone sowie Fluorpolymere oder Copolymere, wobei die Auflistung hier nicht abschliessend sein kann. Letztendlich entscheidet die Optimierung zwischen Barrierewirkung, Kombinierbarkeit der Barrierelagen 26 mit den Zwischenlagen 27, beispielsweise deren Haftung aufeinander, sowie die Wirtschaftlichkeit der Beschichtungsmethode über die Verwendung des Materials für die Barrierelagen 26 ebenso wie über die Verwendung des Materials für die Zwischenlagen 27.

Weiterhin können auch anorganische Materialien für die Zwischenlagen 27 der mehrlagigen Schutzschicht 25, wie sie die Figur 5 darstellt, Verwendung finden, wobei es sich dabei vorwiegend um anorganische Isolatoren handelt. Als Beispiel sei eine solche rein anorganische Schutzschicht 25, die eine Abfolge von dünnen Lagen aus Siliziumnitrid und Siliziumoxid aufweist, genannt, wobei die Abfolge 100 bis 200 nm Siliziumnitrid (Barrierelage 26) - 100 nm Siliziumoxid (Zwischenlage 27) - 100 nm Siliziumnitrid (Barrierelage 26) - 100 nm Siliziumoxid (Zwischenlage 27) und ― 100 nm Siliziumnitrid (Barrierelage 26) eine bevorzugte Anordnung darstellt, da vor allem das Siliziumnitrid als Barriere gegenüber eindringender Feuchtigkeit eine hohe Wirksamkeit aufweist. Die Siliziumoxid-Lage, wenngleich auch diesem Material eine Barrierewirkung zugeschrieben werden kann, dient in der Mehrlagenschicht vorwiegend dazu, mögliche Mikroporen oder Haarrisse in der Siliziumnitrid-Lage zu verschliessen. Eine Mehrlagenschicht 25 besteht somit aus mindestens drei Lagen, bevorzugt jedoch aus fünf Lagen anorganischer Materialien.

Die Lagen 26, 27 der mehrlagigen Schutzschicht 25 können auch aus einem aus mindestens zwei Komponenten bestehenden anorganischen Material zusammengesetzt sein, wobei sich deren stöchiometrische Zusammensetzung von Lage zu Lage ändert. Als Beispiel für Materialien, die sich für die Herstellung von mehrlagigen Schutzschichten 25 mit einer abwechselnden Folge von Lagen 26, 27 unterschiedlicher stöchiometrischer Zusammensetzung eignen, seien Siliziumoxinitride genannt, wobei der Oxid- beziehungsweise der Nitrid-Gehalt von Lage zu Lage variiert.

Die Schichtdicke von rein anorganischen Schutzschichten 25 ist relativ niedrig zu wählen, da diese Materialien bereits für sehr dünne Schichten, beispielsweise aus Siliziumnitrid, eine hohe Barrierewirkung zeigen, jedoch muss hinsichtlich der Steifigkeit darauf geachtet werden, dass die Schutzschicht gegebenenfalls einer thermischen Ausdehnung der Spule folgen kann und in ihr keine Defekte entstehen. Insofern sind diese in einer Gesamtdicke von einigen hundert Nanometern bis einigen Mikrometern, bei Lagendicken von 50 bis 500 Nanometer - im Fall von Mehrlagenschichten 25 - bevorzugt aufzubringen.

Beim Aufbringen einer Mehrlagenschicht 25 steht eine grosse Auswahl von Beschichtungsverfahren zu Verfügung. Es seien hier für das Erzeugen der Barriereschichten 26 und/oder oben genannter anorganischer Zwischenschichten 27 beispielhaft Aufdampfen im Vakuum, Aufdampfen an Luft, Plasmabeschichten, Mikrowellen-Plasmabeschichten, sputtern", Sol-Gelverfahren, "chemical vapor deposition (CVD)", "combustion chemical vapor deposition (CCVD)", "plasma enhanced chemical vapor deposition (PECVD)", "plasma impulse chemical vapor deposition (PICVD)", sowie, insbesondere für das Aufbringen von Metallen, elektrochemisches Abscheiden, genannt.

Für das Aufbringen der polymeren Zwischenschichten 27 sind folgende Beschichtungsmethoden möglich: Sprüh-, Streich- und Tauchverfahren, insitu-Polymersisation Polymersisation von durch "flash evaporation" aufgebrachten Monomeren oder Oligomeren, sowie Elektrophorese, Kataphorese oder Anaphorese.

In Fällen zu erwartender mechanischer Beanspruchung ist die Schutzbeschichtung mit einer Abdeckschicht (hier nicht gezeigt) versehen, die die Schutzschicht 22, 25 vor allem gegenüber mechanischen äusseren Einwirkungen schützt. Insbesondere werden hierfür Polymere, mit einer besonders geringen Aufnahmefähigkeit für Feuchtigkeit, wie Polyacrylate, anorganisch-organische Hybridpolymere oder Silikone verwendet.

Eine bevorzugte Ausführungsform einer Beschichtung zum Schutz eine Spule 13 in einem induktiven Sensor weist eine ausgleichende Schicht 21 aus einem anorganischorganischen Hybridpolymer auf. Diese ausgleichende Schicht 21 kann mittels eines Tauchverfahrens, bei welchem eine zylinderförmige Spule 13 sich auf Rollen abstützt und mit einem Teil ihrer Mantelfläche in das in gelöster Form vorliegende, flüssige Hybridpolymer eintaucht, wobei infolge einer Drehbewegung der Rollen sich die Spule gegenläufig dreht und dabei ihre gesamte Mantelfläche gleichmässig benetzt wird. Nach einem Aushärtevorgang der ausgleichenden Schicht 21 bei erhöhter Temperatur zwischen 80°C und 130°C, bei welchem sich das anorganisch-organische Hybridpolymer vernetzt, wird die Spule in eine PECVD-Beschichtungsanlage eingebracht und mit einer Schutzschicht aus mehreren Lagen von Siliziumnitrid im Wechsel mit Siliziumoxid versehen. Die Methode des plasma-enhanced-chemical-vapour-deposition (PECVD) hat den Vorteil, dass die Spule 13 in der Beschichtungsanlage einfach gehaltert werden kann, da das Plasma die gesamte Spulenoberfläche umgibt und somit das Beschichtungsmaterial sich an allen Orten, insbesondere konformal, auf derselben niederschlägt.

Anders sind die Verhältnisse, wenn das Beschichtungsmaterial für die Schutzschicht 22, 25 beispielsweise aufgedampft wird oder durch Sputtern abgeschieden wird, da hier infolge von Schattenwirkung keine gleichmässige Schutzschicht entstehen kann. Dem wird durch Drehen der Spule 13 in der Beschichtungsanlage abgeholfen, so dass sämtliche zu beschichtenden Oberflächen der Materialquelle zugewandt werden können.

Die mit einer beschriebenen Schutzbeschichtung versehene Spule 13 oder Spulenanordnung 23, welche eine ausgleichende erste Schicht 21 aufweist, auf welcher eine zweite Schicht 22 als Schutzschicht gegen eindringende Feuchtigkeit aufgebracht ist, wurde in bevorzugten Ausgestaltungen beschrieben und dargestellt. Anhand der erfindungsgemässen Lehre sind jedoch weitere fachmännische Ausgestaltungen realisierbar. Insbesondere muss die anhand der Figur 1 beschriebene und mit einer beschichteten Spule versehene Kraftmesszelle 1 nicht zwingend über ein Hebelsystem zur Kraftuntersetzung aufweisen, sondern der induktive Sensor kann auch direkt mit dem vertikal auslenkbaren Bereich 3 verbunden sein.

### Bezugszeichenliste

- 1: Kraftmesszelle
- 2: Feststehender Bereich
- 3: vertikal auslenkbarer Bereich
- 4: Lenker
- 5: Biegelager
- 6: Hebel
- 7: Biegelager zur Abstützung des Hebels
- 8: kurzer Hebelarm
- 9: Koppelelement
- 10: Permanentmagnetsystem
- 11: Luftspalt
- 12: längerer Hebelarm
- 13: Spule
- 14: Opto-elektronische Messvorrichtung
- 15: Ausleger
- 16: Spulenkörper
- 17: Dichtungsring
- 18: Öffnung
- 19: Zuleitungen zur Spule
- 20: Windungen
- 21: ausgleichende Schicht
- 22: Schutzschicht
- 23: Spulenanordnung
- 24: Übergangsbereich
- 25: Mehrlagenschicht
- 26: Barrierelage
- 27: Zwischenlage
- 28: Draht
- 29: Isolation des Drahts

## Patentansprüche

1. Spule (13) für einen induktiven Sensor, insbesondere in einem nach dem Prinzip der elektromagnetischen Kraftkompensation arbeitenden Sensor zur Wandlung der Grösse der von einer Last in einer Kraftmesszelle (1) induzierten Kraft in ein elektrisches Signal (I_{cmp}), wobei die Spule (13) mit Mitteln zum Schutz gegen eindringende Feuchtigkeit versehen ist, wobei die Mittel zum Schutz eine Schutzbeschichtung aufweisen, die eine erste ausgleichende Schicht (21) aufweist, auf welcher eine zweite, als Schutzschicht gegen eindringende Feuchtigkeit wirkende Schicht (22, 25) aufgebracht ist, wobei die Schutzschicht (22, 25) mehrere Lagen in einer Abfolge von anorganischen Barrierelagen (26) und Zwischenlagen (27) aufweist, **dadurch gekennzeichnet dass** die Schutzschicht aus mindestens drei Lagen besteht, wobei einer anorganischen Barrierelage (26) eine dem Abdichten von Mikroporen und Haarrissen in den Barrierelagen (26) dienende Zwischenlage (27) folgt und der Zwischenlage (27) eine weitere Barrierelage (26).

2. Spule nach Anspruch 1, **dadurch gekennzeichnet, dass** die Barrierelagen (26) aus anorganischem Material und die Zwischenlagen (27) aus polymerem Material bestehen.

3. Spule nach Anspruch 1, **dadurch gekennzeichnet, dass** die Barrierelagen (26) und die Zwischenlagen (27) aus anorganischem Material bestehen.

4. Spule nach Anspruch 3, **dadurch gekennzeichnet, dass** die Barrierelagen (26) und die Zwischenlagen (27) verschiedene anorganische Materialien aufweisen, und/oder verschiedene stöchiometrische Zusammensetzungen eines aus mindestens zwei Komponenten bestehenden anorganischen Materials aufweisen, und/oder variierende strukturelle Parameter eines anorganischen Materials aufweisen.

5. Spule nach einem der Ansprüche 1 bis 4, **dadurch gekennzeichnet, dass** die Spule (13) auf einem Spulenkörper (16) angeordnet ist, und der Spulenkörper (16) ebenfalls, zumindest teilweise, von der Schutzbeschichtung bedeckt ist.

6. Spule nach Anspruch 1, **dadurch gekennzeichnet, dass** die Schutzschicht (22) eine kontinuierliche Veränderung eines oder mehrerer Parameter, insbesondere der chemischen Zusammensetzung über ihre Dicke aufweist.

7. Spule nach einem der Ansprüche 1 bis 6, **dadurch gekennzeichnet, dass** die Spule (13) eine Kapselungsvorrichtung (17) aufweist und mindestens die von der Kapselung (17) nicht abgedichteten Teile, wie die Anschlussdrähte (19) der Spule (13) und/oder die Übergangsstellen (24) zwischen einem gegebenenfalls vorhandenen Spulenkörper (16) und der Kapselungsvorrichtung (17) von der Schutzbeschichtung bedeckt sind.

8. Spule nach einem der Ansprüche 1 bis 7, **dadurch gekennzeichnet, dass** die Schutzschicht (22, 25) mit einer Abdeckschicht versehen ist.

9. Kraftmesszelle (1) mit einer Vorrichtung zur Kraftübertragung und mit einem nach dem Prinzip der elektromagnetischen Kraftkompensation arbeitenden Sensor zur Wandlung der Grösse der von einer Last erzeugten Kraft in ein elektrisches Signal (I_{cmp}), welcher Sensor eine Spule (13), die im magnetischen Feld eines Permanentmagneten (10) in einer Dimension beweglich ist, aufweist, wobei die Spule (13) nach einem der Ansprüche 1 bis 8 ausgestaltet ist.

10. Verfahren zum Aufbringen einer Schutzbeschichtung auf eine Spule (13) nach einem der Ansprüche 1 bis 8, wobei eine erste ausgleichende Schicht (21) auf die Spule (13) aufgebracht wird und auf der ausgleichenden Schicht (21) eine zweite, als Schutzschicht gegen eindringende Feuchtigkeit wirkende Schicht (22, 25) abgeschieden wird, wobei die Schutzschicht (22, 25) in mehrere Lagen nacheinander in einer Abfolge von anorganischen Barrierelagen (26) und Zwischenlagen (27) aufgebracht wird, **dadurch gekennzeichnet, dass** die Schutzschicht aus mindestens drei Lagen besteht, wobei einer anorganischen Barrierelage (26) eine dem Abdichten von Mikroporen und Haarrissen in den Barrierelagen (26) dienende Zwischenlage (27) folgt und der Zwischenlage (27) eine weitere Barrierelage (26).

11. Verfahren nach Anspruch 10, **dadurch gekennzeichnet, dass** das Aufbringen der ausgleichenden Schicht (21) mittels eines Tauchverfahrens erfolgt.

12. Verfahren nach Anspruch 10, oder 11, **dadurch gekennzeichnet, dass** die Barrierelagen (26) und die Zwischenlagen (27) aus anorganischem Material hergestellt werden, wobei die mehrlagige anorganische Schutzschicht (25) in einem Arbeitsgang beziehungsweise in einer Beschichtungsanlage erzeugt wird.

13. Verfahren nach Anspruch 12, **dadurch gekennzeichnet, dass** für die Herstellung der anorganischen Schutzschicht mit mindestens einem kontinuierlich variierenden Parameter während deren Aufbringens die Quelle ihre Materialzusammensetzung ändert oder dass aus zwei Quellen mit sich jeweils ändernder Rate Material abgeschieden wird.

14. Verfahren nach einem der Ansprüche 10 bis 13, **dadurch gekennzeichnet, dass** das Aufbringen der Schutzschicht (22, 25) mittels der Methode der plasma-enhanced-chemical-vapour-deposition (PECVD) erfolgt.

15. Verfahren nach einem der Ansprüche 10 bis 14. **dadurch gekennzeichnet, dass** das Aufbringen der Schutzschicht (22, 25) mittels Aufdampfen oder Sputtern erfolgt, wobei die Spule (13) während des Beschichtungsvorgangs gedreht wird.

## Claims

1. Coil (13) for an inductive sensor, in particular a coil that is used in a sensor that operates according to the principle of electromagnetic force compensation for converting an amount of force generated by a load applied to a force-measuring cell (1) into an electrical signal (I_{cmp}), wherein the coil (13) is provided with protective means against the penetration of moisture, wherein the protective means include a protective covering comprising a first level of coverage (21) to even out the surface of the coil, and a second level of coverage(22, 25) arranged on top of the first level (21) as a protective coating (22, 25) against moisture penetration, wherein the protective coating (22, 25) has several layers in a sequence of inorganic barrier layers (26) and intermediate layers (27), **characterized in that** the protective coating consists of at least three layers arranged so that an inorganic barrier layer (26) is followed by an intermediate layer (27) serving to seal micro-pores and hairline breaks in the barrier layers (26), and the intermediate layer (27), in turn, is followed by a further barrier layer (26).

2. Coil according to claim 1, **characterized in that** the barrier layers (26) consist of inorganic material and the intermediate layers (27) consist of polymer material.

3. Coil according to claim 1, **characterized in that** the barrier layers (26) and the intermediate layers (27) consist of inorganic material.

4. Coil according to claim 3, **characterized in that** the barrier layers (26) and the intermediate layers (27) comprise different inorganic materials and/or different stoichiometric compositions of an inorganic material consisting of at least two components and/or an inorganic material in which the structural parameters vary.

5. Coil according to one of the claims 1 to 4, **characterized in that** the coil (13) is arranged on a coil former (16), and the coil former (16) is likewise at least partially covered by the protective covering.

6. Coil according to claim 1, **characterized in that** the protective coating (22) has one or more material parameters, including in particular the chemical composition of the coating, varying continuously over the thickness of the coating.

7. Coil according to one of the claims 1 to 6, **characterized in that** the coil (13) has an encapsulation device (17) and at least the parts that are not sealed by the encapsulation (17), such as the connecting wires (19) of the coil (13) and/or, if the coil has a coil former (16), the boundary areas (24) between said coil former (16) and the encapsulation device (17) are covered by the protective covering.

8. Coil according to one of the claims 1 to 7, **characterized in that** the protective coating (22, 25) is provided with a cover coating.

9. Force-measuring cell (1) with a force-transmitting mechanism and with a sensor that functions according to the principle of electromagnetic force compensation for converting the amount of a force generated by a load into an electrical signal (I_{cmp}), wherein the sensor comprises a coil (13) that is movable in one dimension in the magnetic field of a permanent magnet (10), and wherein the coil (13) is configured in accordance with one of the claims 1 to 8.

10. Method of applying a protective covering to a coil (13) according to one of the claims 1 to 8, wherein a first, surface-smoothing level of coverage (21) is applied to the coil (13), and on the first, surface-smoothing level of coverage (21), a second level of coverage (22, 25) is deposited as a protective coating (22, 25) against the penetration of moisture, wherein the protective coating (22, 25) is applied in an alternating sequence of layers in which inorganic barrier layers (26) and intermediate layers (27) follow each other, **characterized in that** the protective coating consists of at least thee layers which are arranged so that an inorganic barrier layer (26) is followed by an intermediate layer (27) serving to seal micro-pores and hairline breaks in the barrier layers (26), and the intermediate layer (27), in turn, is followed by a further barrier layer (26).

11. Method according to claim 10, **characterized in that** the step of applying the surface-smoothing level of coverage (21) is performed by means of an immersion process.

12. Method according to claim 10 or 11, **characterized in that** the barrier layers (26) and the intermediate layers (27) are made of inorganic material, wherein the multi-layered inorganic protective coating (25) is produced in a single operation, i.e. in a single coating-deposition apparatus.

13. Method according to claim 12, **characterized in that** the process of applying the inorganic protective coating with at least one continuously variable parameter is performed with a source that changes its material composition during the deposition process, or with two sources from which material is deposited at different respective deposition rates.

14. Method according to one of the claims 10 to 13, **characterized in that** the step of applying the protective coating (22, 25) is performed by means of the method of plasma-enhanced chemical vapor deposition (PECVD).

15. Method according to one of the claims 10 to 14, **characterized in that** the step of applying the protective coating (22, 25) is performed by means of vapor deposition or sputtering, wherein the coil (13) is revolving during the coating process.

## Revendications

1. Bobine (13) pour un capteur inductif, en particulier dans un capteur travaillant selon le principe de la compensation électromagnétique des forces pour la conversion de la grandeur de la force induite par une charge dans une cellule de mesure de charge (1) en un signal électrique (I_{cmp}), la bobine (13) étant pourvue de moyens de protection contre la pénétration d'humidité, les moyens de protection comportant un revêtement protecteur avec une première couche égalisatrice (21), sur laquelle est appliquée une deuxième couche (22, 25) agissant comme une couche de protection contre la pénétration d'humidité, la couche de protection (22, 25) comportant plusieurs strates, sous la forme d'une suite de strates de barrière inorganique (26) et de strates intermédiaires (27), **caractérisée en ce que** la couche de protection est constituée d'au moins trois strates, une strate de barrière inorganique (26) étant suivie d'une strate intermédiaire (27) servant à colmater les micropores et microfissures dans la strate de barrière (26), la strate intermédiaire (27) étant suivie d'une autre strate de barrière (26).

2. Bobine selon la revendication 1, **caractérisée en ce que** les strates de barrière (26) sont constituées d'un matériau inorganique et les strates intermédiaires (27) d'un matériau polymère.

3. Bobine selon la revendication 1, **caractérisée en ce que** les strates de barrière (26) et les strates intermédiaires (27) sont constituées d'un matériau inorganique.

4. Bobine selon la revendication 3, **caractérisée en ce que** les strates de barrière (26) et les strates intermédiaires (27) comportent différents matériaux inorganiques, et/ou différentes compositions stoechiométriques d'un matériau inorganique comprenant au moins deux composants, et/ou des paramètres structurels variables d'un matériau inorganique.

5. Bobine selon l'une des revendications 1 à 4, **caractérisée en ce que** la bobine (13) est disposée sur un corps de bobine (16), et le corps de bobine (16) est également, au moins partiellement, recouvert par le revêtement de protection.

6. Bobine selon la revendication 1, **caractérisée en ce que** la couche de protection (22) présente une variation continue d'un ou de plusieurs paramètres, en particulier de la composition chimique sur son épaisseur.

7. Bobine selon l'une des revendications 1 à 6, **caractérisée en ce que** la bobine (13) comporte un dispositif de enfermement (17) et **en ce qu'**au moins les parties non protégées par l'enfermement (17), telles que les fils de raccordement (19) de la bobine (13) et/ou les régions de transition (24) entre un corps de bobine (16) éventuellement existant et le dispositif d'enfermement (17), sont recouvertes par le revêtement de protection.

8. Bobine selon l'une des revendications 1 à 7, **caractérisée en ce que** la couche de protection (22, 25) est pourvue d'une couche de recouvrement.

9. Cellule de mesure de force (1) avec un dispositif pour la transmission de force et avec un capteur travaillant selon le principe de compensation électromagnétique des forces pour la conversion de la grandeur de la force produite par une charge en signal électrique (I_{cmp}), lequel capteur comportant une bobine (13) mobile dans une dimension dans le champ magnétique d'un aimant permanent (10), la bobine (13) étant conçue selon l'une des revendications 1 à 8.

10. Procédé pour l'application d'un revêtement de protection sur une bobine (13) selon l'une des revendications 1 à 8, dans lequel une première couche égalisatrice (21) est appliquée sur la bobine (13) et une deuxième couche (22, 25) agissant comme couche de protection contre la pénétration d'humidité est déposée sur la couche égalisatrice (21), la couche de protection (22, 25) étant appliquée en plusieurs strates consécutives, sous la forme d'une suite de strates de barrière (26) et de strates intermédiaires (27), **caractérisé en ce que** la couche de protection est constituée d'au moins trois strates, une strate de barrière inorganique (26) étant suivie par une strate intermédiaire (27) servant à colmater les micropores et microfissures dans la strate de barrière (26), la strate intermédiaire (27) étant suivie d'une autre strate de barrière (26).

11. Procédé selon la revendication 10, **caractérisé en ce que** l'application de la couche égalisatrice (21) est effectuée au moyen d'un procédé d'immersion.

12. Procédé selon l'une des revendications 10 ou 11, **caractérisé en ce que** les strates de barrière (26) et les strates intermédiaires (27) sont constituées d'un matériau inorganique, la couche de protection (25) inorganique multi-strates étant fabriquée au cours d'un cycle de travail ou bien dans un dispositif de revêtement.

13. Procédé selon la revendication 12, **caractérisé en ce que** pour la fabrication de la couche de protection inorganique, avec au moins un paramètre continuellement variable pendant l'application de celle-ci, la source varie sa composition de matériau, ou **en ce que** le dépôt se fait à partir de deux sources avec des taux de matériau respectifs variables.

14. Procédé selon l'une des revendications 10 à 13, **caractérisé en ce que** l'application de la couche de protection (22, 25) est effectuée au moyen de la méthode de dépôt chimique en phase vapeur assisté par plasma (PECVD).

15. Procédé selon l'une des revendications 10 à 14, **caractérisé en ce que** l'application de la couche de protection (22, 25) est effectuée par vaporisation ou par pulvérisation cathodique, la bobine (13) étant en rotation pendant le procédé de revêtement.
